# EUROPEAN PATENT SPECIFICATION

(11) **EP 2 800 430 B1**
(45) Date of publication and mention of the grant of the patent: **28.06.2017**
(21) Application number: 13738637.1
(22) Date of filing: 21.01.2013
(51) Int. Cl.: H04W 68/00

(54) **SYSTEM INFORMATION UPDATING METHOD AND USER EQUIPMENT**
VERFAHREN ZUR AKTUALISIERUNG VON SYSTEMINFORMATIONEN UND BENUTZERGERÄT
PROCÉDÉ DE MISE À JOUR D'INFORMATIONS DE SYSTÈME ET ÉQUIPEMENT D'UTILISATEUR

(30) Priority: 21.01.2012 CN 201210019878
(43) Date of publication of application: 05.11.2014
(73) Proprietor: Huawei Technologies Co., Ltd., Longgang District Shenzhen, Guangdong 518129 (CN)
(72) Inventor: YANG, Fei, Shenzhen Guangdong 518129 (CN); XIONG, Xin, Shenzhen Guangdong 518129 (CN); LI, Yue, Shenzhen Guangdong 518129 (CN); ZHU, Song, Shenzhen Guangdong 518129 (CN); ZHEN, Bin, Shenzhen Guangdong 518129 (CN)
(74) Representative: Epping - Hermann - Fischer
(86) International application number: PCT/CN2013/070751
(87) International publication number: WO 2013/107401

(56) References cited:
- EP-A1- 2 211 506
- WO-A1-2009/058752
- WO-A1-2009/082076
- WO-A1-2011/038272
- WO-A1-2011/082671
- CN-A- 101 686 580
- CN-A- 101 877 825

## Description

### TECHNICAL FIELD

The present invention relate to communications technology, especially to a method for updating system information, an access network equipment, and a user equipment.

### BACKGROUND

In the wireless communications system, duplex data transmission modes can be classified into two types: one is a half duplex data transmission mode allowing data to be transmitted in two directions, nevertheless, it only allows data to be transmitted in one direction at a given time; the other is a full duplex data transmission mode allowing data to be transmitted in two directions in the meantime.

When system information is needed for updates, an access network equipment can indicate the updated system information to a user equipment (User Equipment, abbreviated as a UE) supporting a variety of data transmission modes. As for a user equipment supporting the full duplex data transmission mode, the user equipment can receive the system information in all system information receiving windows according to the above indication; as for a user equipment supporting the half duplex data transmission mode, if all subframes of the user equipment in the system information receiving window corresponding to the updated system information are configured as downlink subframes, the user equipment may likewise receive the updated system information according to the above indication.

Nevertheless, a configured subframe of the user equipment supporting the half duplex data transmission mode in the system information receiving window corresponding to the updated system information, may include an uplink subframe, or may further include an idle subframe. Under such circumstances, the user equipment may be unable to correctly receive the updated system information, thus be unable to perform successive data transmission in light of the updated system information, and resulting in reliability reduction of acquiring system information and reliability reduction of data transmission.

WO 2009/082076 A1 discloses a method of transmitting system information in a base station of a mobile communication system, including: when system information is changed, selecting a UE to be informed that system information is changed; generating a dedicated paging message for informing that system information is changed; and transmitting the generated dedicated paging message to the selected UE through a Dedicated Control Channel (DCCH) (See, par. [13]).

WO 2011/038272 A1 provides methods and systems for facilitating multi-carrier operation in a mobile communication system, and one method includes: receiving a system information (SI) update for at least one of a first component carrier (CC) and a second CC, wherein the first and second CC are provided by a base station (See, par. [0026]).

### SUMMARY

The present invention provides a method for updating system information, an access network equipment, and a user equipment to enhance reliability of acquiring system information and reliability of data transmission.

According to an aspect, a method for updating system information includes:
receiving, by a user equipment, indication information broadcasted by an access network equipment, wherein the indication information is configured to indicate an identifier of updated system information; and
receiving, by the user equipment, the updated system information transmitted by the access network equipment, in a system information window corresponding to the identifier; wherein the user equipment is a user equipment supporting a half duplex data transmission mode and the receiving, by the user equipment, the updated system information transmitted by the access network equipment, in the system information window corresponding to the identifier, specifically includes:
   determining, by the user equipment, an uplink subframe, or, an uplink subframe and an idle subframe, being included in the system information window corresponding to the identifier;
   updating and configuring, by the user equipment, the uplink subframe, or, the uplink subframe and the idle subframe to a downlink subframe;
   receiving, by the user equipment on all subframes in the system information window corresponding to the identifier, the updated system information transmitted by the access network equipment.

According to another aspect, a user equipment includes:
an indication receiving unit, configured to receive indication information broadcasted by an access network equipment, where the indication information is configured to indicate an identifier of updated system information; and
an information receiving unit, configured to receive the updated system information transmitted by the access network equipment in a system information window corresponding to the identifier being indicated by the indication information received by the indication receiving unit; wherein the user equipment is a user equipment supporting a half duplex data transmission mode and the information receiving unit comprises:
   a determining module, configured to determine an uplink subframe, or, an uplink subframe and an idle subframe, being included in the system information window corresponding to the identifier;
   a configuration module, configured to update and configure the uplink subframe, or, the uplink subframe and the idle subframe to a downlink subframe, so as to receive the updated system information transmitted by the access network equipment in the system information window corresponding to the identifier being
   indicated by the indication information received by the indication receiving unit; and
   a receiving module, configured to receive the updated system information transmitted by the access network equipment on all subframes in the system information window corresponding to the identifier being indicated by the indication information received by the indication receiving unit.

It can be seen from the aforementioned technical solutions that embodiments of the present invention can avoid the problem that, in the prior art, the user equipment is unable to correctly receive updated system information in that a configured subframe of the user equipment supporting a half duplex data transmission mode, in a system information receiving window corresponding to updated system information, may include an uplink subframe, or may further include an idle subframe, thus enhancing reliability of acquiring system information and reliability of data transmission.

### BRIEF DESCRIPTION OF DRAWINGS

In order to illustrate the technical solution of the embodiments of the present invention or in prior art more clearly, drawings needed for describing the embodiments and the prior art are briefly introduced hereinafter. Apparently, the drawings being described hereinafter are only some embodiments of the present invention, and persons having ordinary skill in the art may still derive other drawings from the accompanying drawings without creative efforts.
FIG. 1 is a schematic flow diagram of a method for updating system information according to an embodiment of the present invention;
FIG. 2 is a schematic flow diagram of a method for updating system information according to another embodiment of the present invention;
FIG. 3 is a schematic block diagram of an access network equipment according to another embodiment of the present invention;
FIG. 4 is a schematic block diagram of a user equipment according to another embodiment of the present invention;
FIG. 5 is a schematic block diagram of a user equipment according to another embodiment of the present invention.

### DESCRIPTION OF EMBODIMENTS

For the purpose of better clarifying the objectives, technical solutions and advantages in embodiments of the present invention, the following clearly and comprehensively describes the technical solutions in embodiments of the present invention with reference to the accompanying drawings of embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

The technology solutions of the present invention may be applied to a variety of wireless communications systems, such as a global system for mobile communications (Global System for Mobile communications, abbreviated as GSM) system, a general packet radio service (General Packet Radio Service, abbreviated as GPRS) system, a code division multiple access (Code Division Multiple Access, abbreviated as code division multiple access) system, a wideband code division multiple access (Wideband Code Division Multiple Access, abbreviated as WCDMA) system or a long term evolution (Long Term Evolution, abbreviated as LTE) system, etc.

Wherein, an access network equipment may be a base station controller (Base Station Controller, abbreviated as BSC) in a GSM system, a GPRS system or a CDMA system, a radio network controller (Radio Network Controller, abbreviated as RNC) in a WCDMA system, or an evolved node B (Evolved Node B, abbreviated as eNB or eNodeB) in a LTE system.

The duplex data transmission mode according to the present invention can either be a frequency division duplexing (Frequency Division Duplexing, abbreviated as FDD) data transmission mode or a time division duplexing (Time Division Duplexing, abbreviated as TDD) data transmission mode. The present invention shall not confine it.

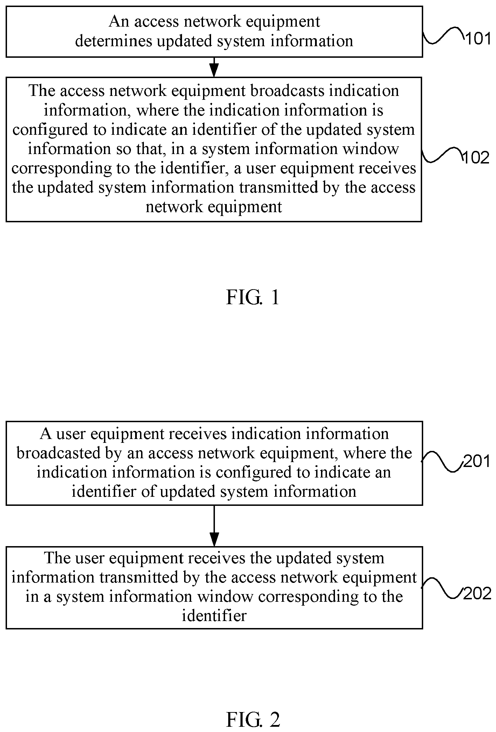

FIG. 1 is a schematic flow diagram of a method for updating system information according to an embodiment of the present invention. As shown in FIG. 1, the method for updating system information according to this embodiment may include:
101, An access network equipment determines updated system information; and
102, The access network equipment broadcasts indication information, where the indication information is configured to indicate an identifier of the updated system information so that, in a system information window corresponding to the identifier, a user equipment receives the updated system information transmitted by the access network equipment.

According to an optional implementation mode of the present invention, the above access network equipment may broadcast a paging message, where the above paging message includes the above indication information.

According to the present embodiment, after the access network equipment determines the updated system information, by means of the above access network equipment's broadcasting the indication information, the above indication information is used to indicate an identifier of the above updated system information, so that the user equipment can receive the above updated system information transmitted by the access network equipment in the system information window corresponding to the above identifier, which is capable of avoiding problems that the user equipment is unable to correctly receive the updated system information in that, in the prior art, the subframe in the system information receiving window corresponding to the updated system information, configured by the user equipment supporting the half duplex data transmission mode, may include the uplink subframe or further include the idle subframe, thus enhancing reliability of acquiring system information and reliability of data transmission.

FIG. 2 is a schematic flow diagram of a method for updating system information according to another embodiment of the present invention, as shown in FIG. 2, the method for updating system information according to the present embodiment may include:
201, a user equipment receives indication information broadcasted by an access network equipment, where the indication information is configured to indicate an identifier of updated system information;
   According to an optional implementation mode, the above user equipment may receive a paging message broadcasted by the access network equipment, where the paging message includes the indication information.
202, the user equipment receives, in a system information window corresponding to the identifier, the updated system information transmitted by the access network equipment.

According to an optional implementation mode, the above user equipment can determine an uplink subframe being included, or, an uplink subframe and an idle subframe being included in the system information window corresponding to the identifier; then, the user equipment updates and configures the uplink subframe, or, the above uplink subframe and idle subframe to a downlink subframe; lastly, the user equipment receives, on all subframes in the system information window corresponding to the identifier, the updated system information transmitted by the access network equipment.

Furthermore, in order not to influence uplink data transmission and downlink data transmission of the user equipment supporting a full duplex data transmission mode, only when the user equipment is the one supporting a half duplex data transmission mode can it carry out determining the uplink subframe being included, or the uplink subframe and the idle subframe being included, in the system information window corresponding to the identifier.

According to the present embodiment, by means of the user equipment's receiving the indication information broadcasted by the access network equipment, the above indication information is used to indicate the identifier of the updated system information, so that the user equipment can receive, in the system information window corresponding to the identifier, the updated system information transmitted by the above access network equipment, which is capable of avoiding problems that the user equipment is unable to correctly receive the updated system information in that, in the prior art, the subframe in the system information receiving window corresponding to the updated system information, configured by the user equipment supporting the half duplex data transmission mode, may include the uplink subframe or further include the idle subframe, thus enhancing reliability of acquiring system information and reliability of data transmission.

In addition, according to another embodiment of the present invention, after the above user equipment receives, on all subframes in the system information window corresponding to the above identifier, the above updated system information transmitted by the access network equipment, the user equipment can further restore and configure the updated and configured downlink subframe to the uplink subframe, or to the uplink subframe and the idle subframe, so as to reduce influence on the data transmission efficiency for the user equipment as much as possible.

In order to better clarify the method provided by the embodiment of the present invention, next a LTE system will be exemplified. In a LTE system, the maximum number of pieces of system information (System Information, abbreviated as SI) is 12, where each SI may consist of one or more system information block(s) (System Information Block, abbreviated as SIB). In the LTE system, the number of SIBs capable of being mapped onto SI is 12, i.e., SIB2 ∼SIB13. If each SI is consisted of one SIB, the indication information can be represented as a 12 bits bitmap, where each U bit in the bitmap may correspond to one SI, such as: the highest bit represents SI1, and so on, the lowest bit represents SI12; 1 represents update, 0 represents not update, i.e., U_{SI1} U_{SI2} U_{SI3} U_{SI4} U_{SI5} U_{SI6} U_{SI7} U_{SI8} U_{SI9} U_{SI10} U_{SI11} U_{SI12}; if each SI is consisted of two SIBs, the indication information can be represented as a 6 bits bitmap, where each U bit in the bitmap may correspond to one SI, such as: the highest bit represents SI1, and so on, the lowest bit represents SI6; 1 represents update, 0 represents not update, i.e., U_{SI1} U_{SI2} U_{SI3} U_{SI4} U_{SI5} U_{SI6}. By the above indication information, it is possible to indicate which system information is updated.

Postulate that each SI is consisted of one SIB. When an eNodeB determines the updated system information, i.e., determines SI2 and SI4 is updated, the eNodeB may broadcast a paging message, wherein the paging message includes indication information, i.e., 010100000000. After the UE receives the indication information broadcasted by the eNodeB, when the UE is a user equipment supporting a half duplex data transmission mode, the UE is capable of determining whether a uplink subframe, or a uplink subframe and an idle subframe are included in the system information window corresponding to the above identifier. If the UE has determined the system information window corresponding to the above identifier includes the uplink subframe, or includes the uplink subframe and the idle subframe, it is possible to update and configure the uplink subframe, or the uplink subframe and the idle subframe as a downlink subframe, and receive the above updated system information, i.e.,SI2 and SI4, transmitted by the eNodeB on all subframes (after updates and configuration) in the system information window corresponding to the above identifier.

Hitherto, in the above LTE system, the subframe configured in the system information receiving window corresponding to the updated system information by the UE supporting the half duplex data transmission mode may include the uplink subframe, or may further include the idle subframe. Under such circumstances, the UE supporting the half duplex data transmission mode may update and configure the uplink subframe, or the uplink subframe and the idle subframe as the downlink subframe, so that the UE can receive the updated system information on all subframes in the system information receiving window corresponding to the updated system information, thus being capable of performing subsequent data transmission according to the updated system information and efficiently enhancing reliability of acquiring system information and reliability of data transmission. In the meantime, the UE supporting the full duplex data transmission mode may as well continue performing the receipt of the updated system information in accordance with the method in the prior art, which will not influence the data transmission efficiency of the UE supporting the full duplex data transmission mode.

It should be noted: in view of each previously mentioned method embodiment, they are all being described as a series of action combinations for simplifying the description, however, a person having ordinary skill in the art shall notice the present invention does not confine to the action sequence being described in that, in light of the present invention, certain steps may adopt other sequences or proceed in parallel. Besides, a person having ordinary skill in the art shall likewise understand that the embodiments being described in the description all belong to preferable embodiments, and the actions and models involved are not necessary for the present invention.

According to the above embodiments, the description for each embodiment has its own emphasis. For a part not detailed in a certain embodiment, it is possible to refer to corresponding description in other embodiments.

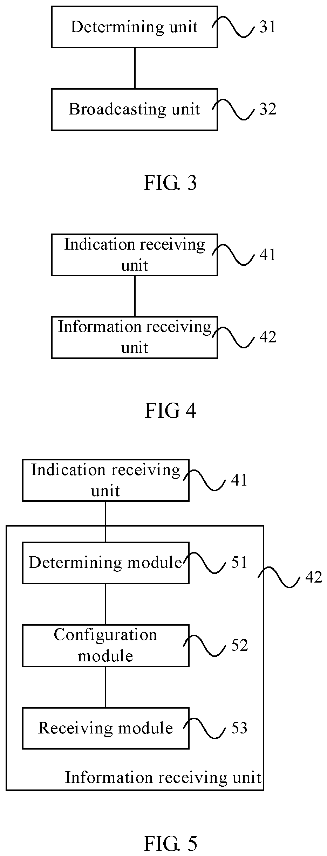

FIG. 3 is a schematic block diagram of an access network equipment according to another embodiment of the present invention. As shown in FIG. 3, the access network equipment according to the present embodiment may include a determining unit 31 and a broadcasting unit 32. Where, the determining unit 31 is configured to determine updated system information; the broadcasting unit 32 is configured to broadcast indication information, where the indication information is configured to indicate an identifier of the updated system information determined by the determining unit 31, so that, in a system information window corresponding to the above identifier, a user equipment can receive the updated system information transmitted by the access network equipment.

According to one optional implementation mode of the present invention, the broadcasting unit 32 may broadcast a paging message, where the paging message includes the above indication information.

According to the embodiment, after the determining unit has determined the updated system information, the broadcasting unit broadcasts the indication information which is configured to indicate the identifier of the updated system information determined by the determining unit, so that the user equipment can receive the updated system information transmitted by the access network equipment in the system information window corresponding to the identifier, which is capable of avoiding problems that the user equipment is unable to correctly receive the updated system information in that, in the prior art, the subframe, configured by the user equipment supporting the half duplex data transmission mode in the system information receiving window corresponding to the updated system information, may include the uplink subframe or further include the idle subframe, thus enhancing reliability of acquiring system information and reliability of data transmission.

FIG. 4 is a schematic block diagram of a user equipment according to another embodiment of the present invention. As shown in FIG. 4, the user equipment according to the present embodiment may include an indication receiving unit 41 and an information receiving unit 42. Wherein, the indication receiving unit 41 is configured to receive the indication information broadcasted by the access network equipment, and the indication information is configured to indicate the identifier of the updated system information; the information receiving unit 42 is configured to receive the updated system information transmitted by the access network equipment in a system information window corresponding to the identifier being indicated by the indication information received by the indication receiving unit 41.

According to one optional implementation mode of the present invention, the indication receiving unit 41, in particular, may receive a paging message broadcasted by the access network equipment, where the paging message includes the indication information.

According to one optional implementation mode of the present invention, as shown in FIG. 5, the information receiving unit 42 may include:
a determining module 51, configured to determine an uplink subframe, or, an uplink subframe and an idle subframe, being included in the system information window corresponding to the identifier;
a configuration module 52, configured to update and configure the uplink subframe, or, the uplink subframe and the idle subframe to a downlink subframe, so as to receive the updated system information transmitted by the access network equipment in a system information window corresponding to the above identifier; and
a receiving module 53, configured to receive the updated system information transmitted by the access network equipment on all subframes in the system information window corresponding to the identifier.

For example: in order not to influence uplink data transmission and downlink data transmission of the user equipment supporting a full duplex data transmission mode, in particular, when the user equipment is the one supporting a half duplex data transmission mode, the determining module 51 can determine the uplink subframe being included, or the uplink subframe and the idle subframe being included, in the system information window corresponding to the identifier.

According to the present embodiment, the user equipment receives via the indication receiving unit the indication information broadcasted by the access network equipment, where the above indication information is configured to indicate the identifier of the updated system information, so that the information receiving unit can receive the updated system information transmitted by the above access network equipment in the system information window corresponding to the identifier, which is capable of avoiding problems that the user equipment is unable to correctly receive the updated system information in that, in the prior art, the subframe, configured by the user equipment supporting the half duplex data transmission mode in the system information receiving window corresponding to the updated system information, may include the uplink subframe or further include the idle subframe, thus enhancing reliability of acquiring system information and reliability of data transmission.

In addition, according to another embodiment of the present invention, after the information receiving unit 42 has finished receiving the updated system information transmitted by the above access network equipment in the system information window corresponding to the identifier, the configuration module 52 in particular may restore and configure the updated and configured downlink subframe to the uplink subframe, or to the uplink subframe and the idle subframe, so as to reduce influence on the data transmission efficiency for the user equipment as much as possible.

A person having ordinary skill in the art may explicitly aware that, for the purpose of convenient and concise description, with regard to the specific working process of the system, apparatus, and unit being set forth above, the corresponding process according to the previous method embodiments may be referred to. Herein no tautology is necessary.

According to several embodiments provided by the present application, it should be understood that the disclosed system, device and method can be implemented by other means. For example, the aforementioned device embodiments are merely illustrative, e.g., the partition of the units are solely logical function partitions, when being implemented in practice, there may be other partition means, such as a plurality of units or components can be combined or be integrated into another system, or some features can be ignored or are not executed. Another point is, the disclosed or discussed couplings, direct couplings or communication connections between one and another may be indirect couplings or communication connections via some interfaces, devices, or units; they may be in an electrical form, a mechanical form, or other forms.

The units illustrated as separated components may or may not be physically separated, and the components illustrated as units may or may not be physical units, i.e., they may be located at one place, or may be distributed to a plurality of network units. It is possible to select part of or all units thereof to meet the ends of the solutions of the embodiments in view of actual demand.

Moreover, in each embodiment of the present invention, each function unit can be integrated into one processing unit, each unit can be physically existed separately, or two or more than two units are integrated into one unit. The above integrated units can be implemented either in a hardware form or in a hardware plus software function unit form.

The aforementioned integrated units being implemented in a software function unit form can be stored in a computer readable storage medium. The aforementioned software function unit can be stored in a storage medium, comprising many instructions configured to enable one computer device (which can be a personal computer, a server, a network device, etc) to execute some steps of the method according to each embodiment of the present invention. The aforementioned storage medium includes: media capable of storing programming codes such as a USB disk, a mobile hard drive, a read-only memory (Read-only Memory, ROM), a random access memory (Random Access Memory, RAM), a magnetic disk, or an optical disc.

## Claims

1. A method for updating system information, comprising:
receiving (201), by a user equipment, indication information broadcasted by an access network equipment, wherein the indication information is configured to indicate an identifier of updated system information; and
receiving (202), by the user equipment, the updated system information transmitted by the access network equipment in a system information window corresponding to the identifier; the method **characterised in that** the user equipment is a user equipment supporting a half duplex data transmission mode and **in that** the receiving (202), by the user equipment, the updated system information transmitted by the access network equipment, in the system information window corresponding to the identifier, specifically comprises:
determining, by the user equipment, an uplink subframe, or, an uplink subframe and an idle subframe, being included in the system information window corresponding to the identifier;
updating and configuring, by the user equipment, the uplink subframe, or, the uplink subframe and the idle subframe to a downlink subframe;
receiving, by the user equipment on all subframes in the system information window corresponding to the identifier, the updated system information transmitted by the access network equipment.

2. The method according to claim 1, wherein receiving (201) by the user equipment indication information broadcasted by an access network equipment specifically comprises:
receiving, by the user equipment, a paging message broadcasted by the access network equipment, wherein the paging message comprises the indication information.

3. The method according to claim 1 or 2, wherein determining, by the user equipment, the uplink subframe, or, the uplink subframe and the idle subframe, being included in the system information window corresponding to the identifier specifically comprises:
determining, by the user equipment, the system information window corresponding to the identifier includes the uplink subframe, or the uplink subframe and the idle subframe.

4. The method according to any one of claims 1 to 3, wherein, after the user equipment on all subframes in the system information window corresponding to the identifier receives the updated system information transmitted by the access network equipment, the method further comprises:
restoring and configuring, by the user equipment, the updated and configured downlink subframe to the uplink subframe, or the uplink subframe and the idle subframe.

5. A user equipment, comprising:
an indication receiving unit (41), configured to receive indication information broadcasted by an access network equipment, wherein the indication information is configured to indicate an identifier of updated system information; and
an information receiving unit (42), configured to receive the updated system information transmitted by the access network equipment in a system information window corresponding to the identifier being indicated by the indication information received by the indication receiving unit; **characterised in that** the user equipment is a user equipment supporting a half duplex data transmission mode and **in that** the information receiving unit (42) comprises:
a determining module (51), configured to determine an uplink subframe, or, an uplink subframe and an idle subframe, being included in the system information window corresponding to the identifier;
a configuration module (52), configured to update and configure the uplink subframe, or, the uplink subframe and the idle subframe to a downlink subframe, so as to receive the updated system information transmitted by the access network equipment in the system information window corresponding to the identifier being indicated by the indication information received by the indication receiving unit; and
a receiving module (53), configured to receive the updated system information transmitted by the access network equipment on all subframes in the system information window corresponding to the identifier being indicated by the indication information received by the indication receiving unit.

6. The user equipment according to claim 5, wherein the indication receiving unit (41) is specifically configured to
receive a paging message being broadcasted by the access network equipment, wherein the paging message comprises the indication information.

7. The user equipment according to claim 5 or 6, wherein the determining module (51) is specifically configured to,
determine the system information window corresponding to the identifier being indicated by the indication information received by the indication receiving unit includes the uplink subframe, or the uplink subframe and the idle subframe.

8. The user equipment according to any one of claims 5 to 7, wherein the configuration module (52) is specifically configured to
restore and configure the updated and configured downlink subframe to the uplink subframe, or the uplink subframe and the idle subframe.

## Patentansprüche

1. Verfahren zum Aktualisieren von Systeminformationen, das Folgendes umfasst:
Empfangen (201) durch ein Anwendergerät von Angabeinformationen, die durch eine Zugangsnetzeinrichtung rundgesendet werden, wobei die Angabeinformationen konfiguriert sind, eine Kennung aktualisierter Systeminformationen anzugeben; und Empfangen (202) durch das Anwendergerät der aktualisierten Systeminformationen, die durch die Zugangsnetzeinrichtung gesendet werden, in einem Systeminformationsfenster, das der Kennung entspricht;
wobei das Verfahren **dadurch gekennzeichnet ist, dass** das Anwendergerät ein Anwendergerät ist, das eine Halbduplex-Datenübertragungsbetriebsart unterstützt, und dadurch, dass
das Empfangen (202) durch das Anwendergerät der aktualisierten Systeminformationen, die durch die Zugangsnetzeinrichtung gesendet werden, in dem Systeminformationsfenster, das der Kennung entspricht, insbesondere Folgendes umfasst:
Bestimmen durch das Anwendergerät eines Aufwärtsstreckenunterrahmens oder eines Aufwärtsstreckenunterrahmens und eines unbesetzten Unterrahmens, die in dem Systeminformationsfenster, das der Kennung entspricht, enthalten sind;
Aktualisieren und Konfigurieren durch das Anwendergerät des Aufwärtsstreckenunterrahmens oder des Aufwärtsstreckenunterrahmens und des unbesetzten Unterrahmens als einen Abwärtsstreckenunterrahmen;
Empfangen durch das Anwendergerät auf allen Unterrahmen in dem Systeminformationsfenster, das der Kennung entspricht, der aktualisierten Systeminformationen, die durch die Zugangsnetzeinrichtung gesendet werden.

2. Verfahren nach Anspruch 1, wobei Empfangen (201) durch das Anwendergerät von Angabeinformationen, die durch eine Zugangsnetzeinrichtung rundgesendet werden, insbesondere Folgendes umfasst:
Empfangen durch das Anwendergerät einer Paging-Nachricht, die durch die Zugangsnetzeinrichtung rundgesendet wird, wobei die Paging-Nachricht die Angabeinformationen umfasst.

3. Verfahren nach Anspruch 1 oder 2, wobei Bestimmen durch das Anwendergerät des Aufwärtsstreckenunterrahmens oder des Aufwärtsstreckenunterrahmens und des unbesetzten Unterrahmens, die in dem Systeminformationsfenster, das der Kennung entspricht, enthalten sind, insbesondere Folgendes umfasst:
Bestimmen durch das Anwendergerät, dass das Systeminformationsfenster, das der Kennung entspricht, den Aufwärtsstreckenunterrahmen oder den Aufwärtsstreckenunterrahmen und den unbesetzten Unterrahmen enthält.

4. Verfahren nach einem der Ansprüche 1 bis 3, wobei das Verfahren, nachdem das Anwendergerät auf allen Unterrahmen in dem Systeminformationsfenster, das der Kennung entspricht, die aktualisierten Systeminformationen, die durch die Zugangsnetzeinrichtung gesendet werden, empfängt, ferner Folgendes umfasst:
Wiederherstellen und Konfigurieren durch das Anwendergerät des aktualisierten und konfigurierten Abwärtsstreckenunterrahmens als den Aufwärtsstreckenunterrahmen oder den Aufwärtsstreckenunterrahmen und den unbesetzten Unterrahmen.

5. Anwendergerät, das Folgendes umfasst:
eine Angabeempfangseinheit (41), die konfiguriert ist, Angabeinformationen zu empfangen, die durch eine Zugangsnetzeinrichtung rundgesendet werden, wobei die Angabeinformationen konfiguriert sind, eine Kennung aktualisierter Systeminformationen anzugeben; und
eine Informationsempfangseinheit (42), die konfiguriert ist, die aktualisierten Systeminformationen, die durch die Zugangsnetzeinrichtung gesendet werden, in einem Systeminformationsfenster, das der Kennung entspricht, die durch die Angabeinformationen angegeben ist, die durch die Angabeempfangseinheit empfangen wird, zu empfangen;
**dadurch gekennzeichnet, dass** das Anwendergerät ein Anwendergerät ist, das eine Halbduplex-Datenübertragungsbetriebsart unterstützt, und dadurch, dass die Informationsempfangseinheit (42) Folgendes umfasst:
ein Bestimmungsmodul (51), das konfiguriert ist, einen Aufwärtsstreckenunterrahmen oder einen Aufwärtsstreckenunterrahmen und einen unbesetzten Unterrahmen, die in dem Systeminformationsfenster, das der Kennung entspricht, enthalten sind, zu bestimmen;
ein Konfigurationsmodul (52), das konfiguriert ist, den Aufwärtsstreckenunterrahmen oder den Aufwärtsstreckenunterrahmen und den unbesetzten Unterrahmen zu einem Abwärtsstreckenunterrahmen zu aktualisieren und zu konfigurieren, um die aktualisierten Systeminformationen, die durch die Zugangsnetzeinrichtung gesendet werden, in dem Systeminformationsfenster, das der Kennung entspricht, die durch die Angabeinformationen angeben ist, die durch die Angabeempfangseinheit empfangen wird, zu empfangen; und
ein Empfangsmodul (53), das konfiguriert ist, die aktualisierten Systeminformationen, die durch die Zugangsnetzeinrichtung gesendet werden, auf allen Unterrahmen in dem Systeminformationsfenster, das der Kennung entspricht, die durch die Angabeinformationen angegeben ist, die durch die Angabeempfangseinheit empfangen wird, zu empfangen.

6. Anwendergerät nach Anspruch 5, wobei die Angabeempfangseinheit (41) insbesondere konfiguriert ist,
eine Paging-Nachricht zu empfangen, die durch die Zugangsnetzeinrichtung rundgesendet wird, wobei die Paging-Nachricht die Angabeinformationen umfasst.

7. Anwendergerät nach Anspruch 5 oder 6, wobei das Bestimmungsmodul (51) insbesondere konfiguriert ist,
zu bestimmen, dass das Systeminformationsfenster, das der Kennung entspricht, die durch die Angabeinformationen angegeben ist, die durch die Angabeempfangseinheit empfangen werden, den Aufwärtsstreckenunterrahmen oder den Aufwärtsstreckenunterrahmen und den unbesetzten Unterrahmen enthält.

8. Anwendergerät nach einem der Ansprüche 5 bis 7, wobei das Konfigurationsmodul (52) insbesondere konfiguriert ist,
den aktualisierten und konfigurierten Abwärtsstreckenunterrahmen als den Aufwärtsstreckenunterrahmen oder den Aufwärtsstreckenunterrahmen und den unbesetzten Unterrahmen wiederherzustellen und zu konfigurieren.

## Revendications

1. Procédé de mise à jour d'une information de système, consistant à :
recevoir (201), par un équipement d'utilisateur, une information d'indication diffusée par un équipement de réseau d'accès, l'information d'indication étant configurée pour indiquer un identifiant d'une information de système mise à jour ; et
recevoir (202), par l'équipement d'utilisateur, l'information de système mise à jour transmise par l'équipement de réseau d'accès dans une fenêtre d'information de système correspondant à l'identifiant ;
le procédé étant **caractérisé en ce que** l'équipement d'utilisateur est un équipement d'utilisateur prenant en charge un mode de transmission de données en semi-duplex et **en ce que** la réception (202), par l'équipement d'utilisateur, de l'information de système mise à jour transmise par l'équipement de réseau d'accès, dans la fenêtre d'information de système correspondant à l'identifiant, consiste en particulier à :
déterminer, par l'équipement d'utilisateur, une sous-trame de liaison montante, ou une sous-trame de liaison montante et une sous-trame de repos, incluse(s) dans la fenêtre d'information de système correspondant à l'identifiant;
mettre à jour et configurer, par l'équipement d'utilisateur, la sous-trame de liaison montante, ou la sous-trame de liaison montante et la sous-trame de repos, en une sous-trame de liaison descendante ;
recevoir, par l'équipement d'utilisateur sur toutes les sous-trames de la fenêtre d'information de système correspondant à l'identifiant, l'information de système mise à jour transmise par l'équipement de réseau d'accès.

2. Procédé selon la revendication 1, dans lequel la réception (201) par l'équipement d'utilisateur d'une information d'indication diffusée par un équipement de réseau d'accès consiste en particulier à :
recevoir, par l'équipement d'utilisateur, un message de radiomessagerie diffusé par l'équipement de réseau d'accès, le message de radiomessagerie comprenant l'information d'indication.

3. Procédé selon la revendication 1 ou 2, dans lequel la détermination, par l'équipement d'utilisateur, de la sous-trame de liaison montante, ou de la sous-trame de liaison montante et de la sous-trame de repos, incluse(s) dans la fenêtre d'information de système correspondant à l'identifiant, consiste en particulier à :
déterminer, par l'équipement d'utilisateur, la fenêtre d'information de système correspondant à l'identifiant incluant la sous-trame de liaison montante, ou la sous-trame de liaison montante et la sous-trame de repos.

4. Procédé selon l'une quelconque des revendications 1 à 3, le procédé consistant en outre, après la réception, par l'équipement d'utilisateur sur toutes les sous-trames de la fenêtre d'information de système correspondant à l'identifiant, de l'information de système mise à jour transmise par l'équipement de réseau d'accès, à :
restaurer et configurer, par l'équipement d'utilisateur, la sous-trame de liaison descendante mise à jour et configurée en sous-trame de liaison montante, ou en sous-trame de liaison montante et en sous-trame de repos.

5. Équipement d'utilisateur, comprenant :
une unité de réception d'indication (41), conçue pour recevoir une information d'indication diffusée par un équipement de réseau d'accès, l'information d'indication étant configurée pour indiquer un identifiant d'une information de système mise à jour ; et
une unité de réception d'information (42), conçue pour recevoir l'information de système mise à jour transmise par l'équipement de réseau d'accès dans une fenêtre d'information de système correspondant à l'identifiant indiqué par l'information d'indication reçue par l'unité de réception d'indication ;
l'équipement d'utilisateur étant **caractérisé en ce qu'**il prend en charge un mode de transmission de données en semi-duplex et **en ce que** l'unité de réception d'information (42) comprend :
un module de détermination (51), conçu pour déterminer une sous-trame de liaison montante, ou une sous-trame de liaison montante et une sous-trame de repos, incluse(s) dans la fenêtre d'information de système correspondant à l'identifiant ;
un module de configuration (52), conçu pour mettre à jour et configurer la sous-trame de liaison montante, ou la sous-trame de liaison montante et la sous-trame de repos, en sous-trame de liaison descendante, de manière à recevoir l'information de système mise à jour transmise par l'équipement de réseau d'accès dans la fenêtre d'information de système correspondant à l'identifiant indiqué par l'information d'indication reçue par l'unité de réception d'indication ; et
un module de réception (53), conçu pour recevoir l'information de système mise à jour transmise par l'équipement de réseau d'accès sur toutes les sous-trames dans la fenêtre d'information de système correspondant à l'identifiant indiqué par l'information d'indication reçue par l'unité de réception d'indication.

6. Équipement d'utilisateur selon la revendication 5, dans lequel l'unité de réception d'indication (41) est spécialement conçue pour recevoir un message de radiomessagerie diffusé par l'équipement de réseau d'accès, le message de radiomessagerie comprenant l'information d'indication.

7. Équipement d'utilisateur selon la revendication 5 ou 6, dans lequel le module de détermination (51) est spécifiquement conçu pour :
déterminer la fenêtre d'information de système correspondant à l'identifiant indiqué par l'information d'indication reçue par l'unité de réception d'indication incluant la sous-trame de liaison montante, ou la sous-trame de liaison montante et la sous-trame de repos.

8. Équipement d'utilisateur selon l'une quelconque des revendications 5 à 7, dans lequel le module de configuration (52) est spécialement conçu pour :
restaurer et configurer la sous-trame de liaison descendante mise à jour et configurée en sous-trame de liaison montante, ou en sous-trame de liaison montante et en sous-trame de repos.
